# EUROPÄISCHE PATENTSCHRIFT

(11) **EP 2 906 410 B1**
(45) Veröffentlichungstag und Bekanntmachung des Hinweises auf die Patenterteilung: **29.07.2020**
(21) Anmeldenummer: 13805239.4
(22) Anmeldetag: 10.10.2013
(51) Int. Cl.: B29C 64/165, B29C 64/364

(54) **VORRICHTUNG ZUM HERSTELLEN DREIDIMENSIONALER MODELLE MIT TEMPERIERBAREM DRUCKKOPF**
DEVICE FOR PRODUCING THREE-DIMENSIONAL MODELS WITH A TEMPERATURE-CONTROLLABLE PRINT HEAD
DISPOSITIF DE PRODUCTION DE MODÈLES TRIDIMENSIONNELS AU MOYEN D'UNE TÊTE D'IMPRESSION THERMORÉGULABLE

(30) Priorität: 15.10.2012 DE 202012009796 U; 22.03.2013 DE 102013004940
(43) Veröffentlichungstag der Anmeldung: 19.08.2015
(73) Patentinhaber: Voxeljet AG, 86316 Friedberg (DE)
(72) Erfinder: EDERER, Ingo, 82269 Geltendorf (DE); GÜNTHER, Daniel, 80637 München (DE)
(74) Vertreter: Helbig, Christian
(86) Internationale Anmeldenummer: PCT/DE2013/000588
(87) Internationale Veröffentlichungsnummer: WO 2014/059958

(56) Entgegenhaltungen:
- EP-A1- 0 870 622
- WO-A1-2005/105412
- WO-A2-2007/114895
- DE-A1-102006 003 765
- US-A1- 2003 156 147
- US-A1- 2004 232 583

## Beschreibung

Die Erfindung bezieht sich auf eine Vorrichtung zum Herstellen dreidimensionaler Modelle gemäß dem Oberbegriff des Patentanspruches 1.

In der europäischen Patentschrift EP 0 431 924 B1 wird ein Verfahren zur Herstellung dreidimensionaler Objekte aus Computerdaten beschrieben. Dabei wird ein Partikelmaterial In einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke In einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht Ist. Aus den bedruckten und verfestigten Bereichen entsteht so ein dreidimensionales Objekt.

In der WO2007/114895A2 wird ein 3D-Druckverfahren beschrieben, bei dem das Partikelmaterial mittels Energie unter Verwendung eines Absorbers gesintert bzw. geschmolzen wird. Ein spezielles Temperaturmanagement wie In der vorliegenden Anmeldung beschrieben wird darin weder offenbart noch nahe gelegt.

Dieses aus verfestigtem Partikelmaterial hergestellte Objekt Ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

In ähnlicher Weise arbeiten auch andere Pulver-gestützte Rapid-Prototyplng-Prozesse, wie z.B. das selektive Lasersintern oder das Elektron-Beam-Slntern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren zusammengefasst.

Das 3D-Drucken auf Basis pulverförmlger Werkstoffe und Eintrag flüssiger Binder ist unter den Schichtbautechntken das schnellste Verfahren.

Mit diesem Verfahren lassen sich verschiedene Partlkelmaterlallen, unter anderem auch polymere Werkstoffe, verarbeiten. Der Nachteil besteht hier jedoch darin, dass die Partlkelmaterlalschüttung eine gewisse Schüttdichte, die üblicherweise 60% der Feststoffdichte beträgt, nicht übersteigen kann. Die Festigkeit der gewünschten Bauteile hängt jedoch maßgeblich von der erreichten Dichte ab. Insofern wäre es hier für eine hohe Festigkeit der Bauteile erforderlich, 40% und mehr des Partikelmaterialvolumens in Form des flüssigen Binders zuzugeben. Dies Ist nicht nur aufgrund des Einzeitropfeneintrages ein relativ zeitaufwändiger Prozess, sondern bedingt auch viele Prozessprobleme, die z.B. durch den zwangsläufigen Schwund der Flüssigkeitsmenge beim Verfestigen gegeben sind.

In einer anderen Ausführungsform, der unter dem Begriff "High-Speed-Sintering", abgekürzt HSS In der Fachwelt bekannt Ist, erfolgt die Verfestigung des Partikelmaterials über Eintrag von Infrarotstrahlung. Das Partikelmaterial wird dabei physikalisch über einen Aufschmelzvorgang gebunden. Hierbei wird die vergleichsweise schlechte Aufnahme von Wärmestrahlung bei farblosen Kunststoffen ausgenutzt. Diese lässt sich jedoch durch Einbringen eines IR-Akzeptors auch Moderator genannt In den Kunststoff um ein vielfaches steigern. Die IR-Strahlung kann dabei über verschiedene Möglichkeiten wie z.B. einer stabförmigen IR-Lampe eingebracht werden, die gleichmäßig über das Baufeld bewegt wird. Die Selektivität wird über das gezielte Bedrucken der jeweiligen Schicht mit einem IR-Akzeptor erreicht. An den Stellen, die bedruckt wurden, koppelt die IR Strahlung dadurch wesentlich besser in das Partikelmaterial ein, als In den unbedruckten Bereichen. Dies führt zu einer selektiven Erwärmung In der Schicht über den Schmelzpunkt hinaus und damit zur selektiven Verfestigung. Dieser Prozess wird z.B. In EP1740367B1 und EP1648686B1 beschrieben. Dort wird auch eine einfache Vorrichtung aufgezeigt, die jedoch nur in einem kleinen Maßstab funktionsfähig Ist und nicht für das Bedrucken größerer Baufelder geeignet ist, da ein entsprechendes Temperaturmanagement fehlt.

Es ist daher eine Aufgabe der vorliegenden Erfindung eine skalierbare Vorrichtung bereit zu stellen, mit der der HSS-Prozess ermöglicht wird oder zumindest die Nachtelle des Standes der Technik zu verbessern.

Die der Anmeldung zugrunde liegende Aufgabe wird gelöst durch eine Vorrichtung zum Herstellen dreidimensionaler Modelle mittels Schichtauftragstechnik, wobei die Vorrichtung geeignet Ist partikelförmiges Baumaterial auf ein Baufeld aufzutragen, anschließend über einen Tintenstrahldruckkopf ein Moderiermittel selektiv auf das Baumaterial aufzutragen und die bedruckten Bereiche über Zufuhr von IR-Energie zu verfestigen, dadurch gekennzeichnet, dass der Druckkopf (100) durch aktive und/oder passive Kühlung (600) vor übermäßiger Erwärmung geschützt ist und dass die Vorrichtung (104) eine Temperaturregelung aufweist, die in Zusammenspiel mit einem Temperatursensor (500) die Heizmöglichkeiten Im Bauraum (111) regelt, wobei der Temperaturbereich der Bauraumatmosphäre bei 60° C bis 120° C geregelt Ist und der Temperaturgradient auf dem Baufeld dabei 10°C nicht übersteigt.

Die erfindungsgemäße Vorrichtung besteht dabei aus einer Bauebene auf die Schichten des Partikelmaterials abgelegt werden. Die Bauebene wird über eine lineare Verfahreinheit durch einen Bauraum schichtweise bewegt. Der Bauraum kann z.B. über einen Wechselbehälter definiert werden, der nach Prozessende aus der Vorrichtung entnommen werden kann. Die Vorrichtungsteile zum Schichtauftrag bewegen sich in einer Prozesskammer, Die Vorrichtung zum Schichtauftrag kann z.B. ein Vibratlonsbeschlchter gemäß (DE10216013B4) oder ein gegenläufig angetriebene Walze (EP0538244B1) oder ein einfaches Rakel sein, die das Partikelmaterial in dünner Schicht von 20 µm bis 300 µm Dicke, vorzugsweise von 50 µm bis 200 µm Dicke auf das Baufeld aufträgt.
In der Prozesskammer befindet sich auch ein Druckkopf, der mindestens über eine Düse verfügt und die jeweilige Schicht mit einem IR-Akzeptor bedruckt.

Grundsätzlich besteht die Möglichkeit, dass der Auftrag des IR-Akzeptors In Form eines Strahls oder in Form von Einzeltropfen vektorförmig auf dem Baufeld abgelegt wird. Zur Erzielung einer geeigneten Auflösung, sollte die Strahl- bzw. Tropfengröße In einem Bereich von 20 - 200 µm liegen. Zur Erzielung höherer Prozessgeschwindigkeiten Ist es vorteilhaft, einen Druckkopf zu verwenden, der Einzeltropfen über eine Vielzahl an Düsen erzeugt und rasterförmig über die Bauebene bewegt wird. In der Prozesskammer befindet sich dann zudem eine IR-Lampe, die die Bauebene insgesamt oder die Teile der Bauebene In Form eines Spots oder einer Linie beleuchtet. In den letzteren beiden Fällen muss die IR-Lampe, um das gesamt Baufeld zu beleuchten, mit einer Verfahreinheit über das Baufeld bewegt werden. Als vorteilhaft hat sich eine stabförmige IR-Lampe erwiesen, die sich über eine gesamte Breite des Baufeldes erstreckt und einen relativ schmalen Bereich in Verfahrrichtung belichtet. Die Verfahreinheiten zur Bewegung des Beschichters, des Druckkopfes und der IR-Lampe können unabhängig voneinander oder kombiniert ausgeführt werden. Vorteilhafterweise befindet sich die Lampe In stabförmiger Ausführung an der Hinterseite der Beschichtereinheit. Auf diese Weise, kann der Beschichter bei der Rückfahrt in Startposition, die Belichtung ausführen, während die Bewegung In die andere Richtung für die Beschichtung mit evtl. verringerter Lampenleistung genutzt wird, Der Druckkopf kann In dieser Ausführung an einer weiteren Bewegungsachse weiter hinter Lampe montiert sein.

Die Bauebene verfährt vorzugsweise In einem zumindest auf der Seite der Bauebene offenen Bauzylinder und bildet zusammen mit diesem den Bauraum. Vorteilhafterweise lässt sich der Bauraum nach Ende des Druckprozesses aus der Vorrichtung entnehmen. Die Vorrichtung kann dann durch Einsetzen eines weiteren Bauraums wleder einen neuen Schichtbauprozess durchführen.

Mit dem HSS-Prozess lassen sich viele polymere Werkstoffe In Partikelform wie z.B. Polyamid verarbeiten. Als IR-Akzeptor kann z.B. Graphit dienen, der in einer Trägerflüssigkeit als Suspension eingemischt wind. Als Trägerflüssigkeiten eignen sich verschiedene leicht zu verdruckende Flüssigkeiten wie z.B. Isopropanol, Dimethylsuccinat sowie mit Einschränkungen Ethanol oder Wasser.

Die Einstellung des Prozesses muss so erfolgen, dass die Temperatur In den bedruckten Bereichen zumindest kurzzeitig über dem Schmelzpunkt des Partikelmaterials liegt. Bei Polyamid 12 kurz PA12 sind das rund 180°C. In den unbedruckten Bereichen sollte hingegen die Temperatur so niedrig wie möglich sein, da sich das polymere Material auch bei geringerer Temperatur bereits irreversibel verändern kann.

Die IR-Energlemenge, die in das Partikelmaterial eingebracht wird, lässt sich z.B. über die Lampenleistung oder aber auch über die Verfahrgeschwindigkeit der stabförmigen Lampe über das Baufeld einstellen. Nachteilig bei dem Verfahren ist, dass die Trägerflüssigkeit für den IR-Akzeptor auf den bedruckten Bereichen verdampft und bei diesem Vorgang die Temperatur in den Bereichen dadurch sinkt. Es Ist deshalb vorteilhaft, die Temperatur Im Bauraum bereits durch geeignete Maßnahmen auf ein höheres Niveau zu heben, um die notwendige Temperaturdifferenz, die mit der Lampe überwunden werden muss möglichst gering zu halten. Dabei Ist wiederum zu beachten, die Temperatur nicht zu hoch zu wählen, um die Schädigung des Partikelmaterials gering zu halten. Grundsätzlich besteht auch die Möglichkeit, das Partikelmaterial vor der Beschichtung anzuwärmen. Allerdings hat sich herausgestellt, dass sich das Partikelmaterial bei und nach der Beschichtung sehr schnell auf die Umgebungstemperatur einstellt und die Wärmeenergie wieder abgibt. Für PA 12 hat sich ein Temperaturbereich für die Bauraumatmosphäre von 60°C - 120°C als vorteilhaft herausgestellt. Noch vorteilhafter Ist ein Temperaturbereich von 75°C bis 95°C. Bei diesen Temperaturen, kann es sein, dass das Partikelmaterial bereits mit dem Sauerstoff in der Luft zu reagieren beginnen würde. Es kann daher erforderlich sein, den Bauraum mit einem Schutzgas zu beaufschlagen. Als Schutzgas eignet sich z.B. Stickstoff, andere Gase wie Argon sind ebenfalls einsetzbar.

Um die Temperatur Im Bauraum auf das gewünschte Niveau zu erhöhen, kann es notwendig sein, weitere Heizungen In der Vorrichtung vorzusehen. Dies könnte z.B. in Form von IR-Strahlern über dem Baufeld erfolgen, die das gesamte Baufeld möglichst gleichmäßig erwärmen, Es wäre jedoch auch denkbar, die Luft aus der Prozesskammer zu entnehmen, mit entsprechenden Mitteln wie z.B. einem Heizregister anzuwärmen und wieder gezielt In den Prozessraum einzublasen. Darüber hinaus Ist es vorteilhaft, wenn die Wärme Im Prozessraum möglichst konstant gehalten wird. Dazu ist eine Temperaturregelung vorteilhaft, die In Zusammenspiel mit einem Temperatursensor die Heizmöglichkeiten Im Bauraum regelt. Der Temperaturgradient auf dem Baufeld sollte dabei 10°C nicht übersteigen. Um die Temperaturregelung zu vereinfachen, Ist es wünschenswert, möglichst wenig Wärme an die Umgebung zu verlieren. Es Ist daher erforderlich, die Prozesskammer mit geeigneten Maßnahmen zu isolieren und an Türen und Klappen entsprechende Dichtungen vorzusehen. Gleiches gilt für den Bauraum, der ebenfalls so gestaltet ist, dass wenig Wärme an die Umgebung abgegeben wird. Dies erfolgt durch eine doppelwandige Ausführung des Bauzylinders mit entsprechender Isolierung an den Kontaktstellen. Grundsätzlich Ist es auch möglich, den Temperaturverlust Im Bauraum durch eine aktive Beheizung z.B. der Innenwände des Bauzylinders und/oder der Bauplattform auszugleichen. Eine weitere Möglichkeit besteht In der aktiven Einbringung von angewärmtem Gas In den Bauraum, das als Energieträger dient und die Wärme an die Partlkelmaterialschüttung abgibt. Die Einbringung des Gases kann z.B. über Bohrungen In der Bauplattform erfolgen.

Als Druckkopf können sogenannte Strangdosierer dienen, die einen Flüssigkeitsstrom über eine Düse auf das Baufeld lenken. Der Flüssigkeitsstrom beinhaltet den IR-Akzeptor z.B. In Form von festen Graphitpartikeln In einer Lösungsmittel-Suspension. Die Düse sollte für eine geeignete Druckauflösung einen Durchmesser von 0,1 - 0,5 mm aufweisen. Vor der Düse kann ein Ventil eingesetzt werden, das den Flüssigkeitsstrom schnell schalten kann. Die Düse sollte in geringem Abstand von wenigen mm über das Baufeld bewegt werden, um die Positioniergenauigkeit der Ablage des Flüssigkeitsstromes zu gewährleisten. Der Strangdosierer wird mittels mindestens zweier Linearachsen vektorförmig über das Baufeld bewegt. Vorzugsweise besteht die Kinematik aus einem Portal aus drei Linearachsen. Grundsätzlich sind auch andere Bewegungskinematiken denkbar, wie z.B. ein Knickarmroboter, der die den Strangdosierer über das Baufeld führt.

In einer bevorzugten Ausführung wird der IR-Akzeptor in flüssiger Form über einen Druckkopf mit einer Vielzahl an Einzeltropfenerzeugern auf das Baufeld dosiert. Derartige Druckköpfe sind aus vielen Anwendungen bekannt, unter anderem auch im 3D-Druck, wo anstelle des IR-Akzeptors ein Binder schichtweise auf ein Partikelmaterial dosiert wird.

Derartige Tropfenerzeuger arbeiten nach verschiedenen Prinzipien wie z.B. dem Piezo- oder dem Bubble-Jet Prinzip. Neben diesen sogenannten Dropon-Demand Einzeltropfenerzeugern sind dann noch kontinuierlich arbeitende Systeme bekannt, bei denen ein schaltbarer Strom an Einzeltropfen erzeugt wird. Grundsätzlich sind alle diese Systeme für die genannte Aufgabe geelgnet, jedoch weisen die Plezo-Systeme gravierende Vorteile hinsichtlich Lebensdauer, Leistungsfähigkeit und Wirtschaftlichkeit auf.

Plezodrucksysteme arbeiten mit einer oder mehreren offenen Düsen. Die Düsendurchmesser betragen üblicherweise weniger als 80 µm. Die Flüssigkeit wird In ebenfalls sehr kleinen Pumpkammern über einen Plezoaktuator kurzzeitig mit einem Druckimpuls beaufschlagt. In den Düsen wird die Flüssigkeit stark beschleunigt und tritt in Tropfenform aus dieser aus. Aus dieser Funktionsweise ergeben sich bestimmte Grenzen für die vorliegende Vorrichtung. So muss die Flüssigkeit relativ niedrig viskos sein. Vorzugsweise sollte die Viskosität unter 20 mPa s liegen. Zudem müssen die in der Trägerflüssigkeit eingemischten IR-Akzeptor-Partikel deutlich kleiner sein, als die engste Kanalbreite Im Drucksystem. Vorzugsweise sind die Partikel damit kleiner als 5 µm und noch bevorzugter kleiner als 1 µm. Aufgrund der Wirkungsweise des Drucksystems über den Druckstoß ist es erforderlich, dass alle Kanäle und die Pumpkammern gasblasenfrel mit der Flüssigkeit gefüllt sind. Damit dies auch Im Betrieb so bleibt, Ist es erforderlich, dass entweder eine Trägerflüssigkeit gewählt wird, die eine Verdampfungstemperatur über der Betriebstemperatur der Vorrichtung aufweist oder die Temperatur der Flüssigkeit wird so kontrolliert wird, dass kein Phasenübergang in der Flüssigkeit stattfindet. Desweiteren weisen die Piezoaktuatoren eine Grenztemperatur auf, bis zu der sie üblicherweise aufgeheizt werden können ohne irreversiblen Schaden zu nehmen. Diese Temperatur liegt üblicherweise bet unter 120°C.
Aus den obigen Ausführungen wird ersichtlich, dass das Drucksystem einerseits vor zu viel IR-Strahlung Im Prozessraum geschützt werden muss und zum anderen die Temperatur des Drucksystems gegenüber der Prozessraumtemperatur unabhängig geregelt werden muss.

Der Schutz des Drucksystems vor der IR-Strahlung kann durch entsprechende Abschirmung und/oder durch Abstand zu den Strahlungsquellen erfolgen. Dies lässt sich bei den Strahlungsquellen von oben und den Seiten gut bewerkstelligen. Von unten lässt sich der Druckkopf jedoch wenig vor Strahlung schützen, da er in sehr geringem Abstand zum Pulverbett von 1 - 5 mm, vorzugsweise 2-3 mm verfahren muss, Dieser geringe Abstand Ist notwendig, um eine exakte Positionierung der kleinen Flüssigkeitströpfchen auf dem Baufeld zu gewährleisten, Aus diesem Grund Ist es erforderlich, dass die Verweildauer des Druckkopfes über dem heißen Baufeld so gering wie möglich gehalten wird.

Trotz der genannten Maßnahmen, liegt die gewünschte Temperatur des Drucksystems mit 40°C - 60°C deutlich niedriger, als die des Prozessraums. Dafür sind entsprechende Kühlmaßnahmen vorzusehen.

Diese Maßnahmen gliedern sich In Innere Kühlung, äußere Kühlung und Abschottung. Nur eine Kombination verschiedener Maßnahmen ermöglicht eine exakte Regelung. Die Regelung der Temperatur Ist erforderlich, da die Viskosität der Druckflüssigkeit von der Temperatur stark abhängt. Die Dosierielstung des Druckkopfes Ist wiederum mit der Viskosität verknüpft, Eine nicht exakte Regelung kann folglich zu schwankenden Moderiermitteleintägen führen. Dies kann Bauteilverzug zur Folge haben.

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:
Figur 1 ein aus dem Stand der Technik bekanntes Verfahren;
Figur 2 Schema des Prozessablaufs eines nach dem HSS-Prinzip arbeitenden 3D-Druckers
Figur 3 eine grafische Darstellung der Verweilzeiten des Druckkopfes über dem erhitzten Baufeld bei einem Prozess nach Figur 2;
Figur 4 Darstellung des Aufbaus eines Druckkopfes nach dem Stand der Technik
Figur 5 Ein Schema der Regelung der Temperatur eines Druckkopfes nach dem Stand der Technik
Figur 6 Ein erweitertes Schema der Regelung der Temperatur eines Druckkopfes nach dem Stand der Technik mit Innerer oder äußerer Druckkopfkühlung
Figur 7 Ein Schema der Kühlung über Spülen oder Düsenbetätigung

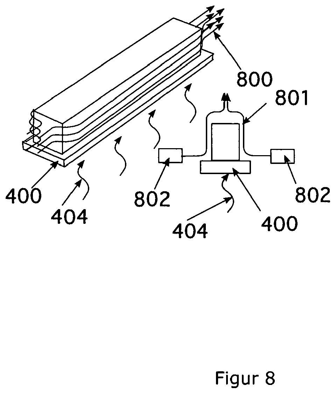

Figur 8 Einen Schrägriss und eine Seitenansicht eines Druckmoduls mit angedeuteten Stromlinien der Kühlluft
Figur 9 Eine Schnittansicht der Kühlmittelkanäle zur Kühlung der Module und der Abdeckplatte
Figur 10 Eine Schnittansicht der Peltierelemente zur aktiven Druckkopfkühlung über massive Kühileitungen
Figur 11 Eine Schnittansicht von einem Druckkopf mit Flächen zur Kühlung durch Verdampfen
Figur 12 Eine Draufsicht auf eine bevorzugte Vorrichtung mit Abschottung als Blockbild
Figur 13 Eine Seitenansicht einer bevorzugten Ausführung mit Schottwand
Figur 14 Eine Draufsicht auf eine bevorzugte Ausführungsform mit verschieblicher Abschottung
Figur 15 Eine Seitenansicht einer bevorzugten Ausführungsform mit Luftvorhang
Figur 16 Eine Seitenansicht einer bevorzugten Vorrichtung mit Druckkopfluftkühlung
Figur 17 Eine Seitenansicht auf eine Vorrichtung zur aktiven Kontaktierung mit einer flüssigkeitsgekühlten Reinigungsvorrichtung und einem Kühlblock

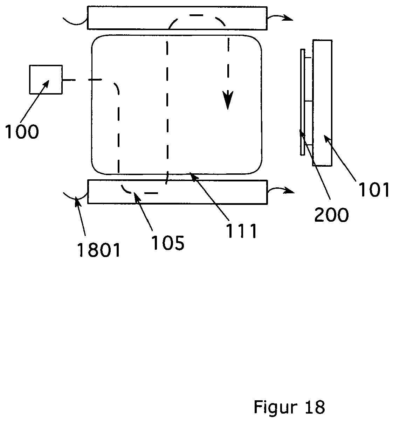

Figur 18 Eine Draufsicht auf eine erfindungsgemäße Vorrichtung mit gekühlten Baufeldrändern
Figur 19 Eine Draufsicht auf eine bevorzugte Ausführung mit linienförmiger Lampe, segmentweiser Ansteuerung und ein Diagramm für die Verfahrgeschwindigkeit

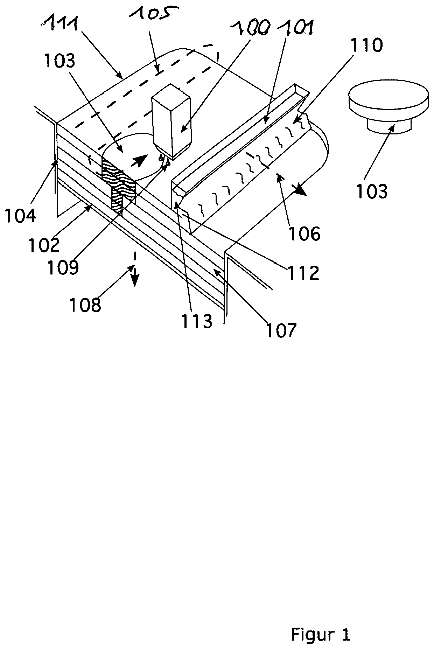

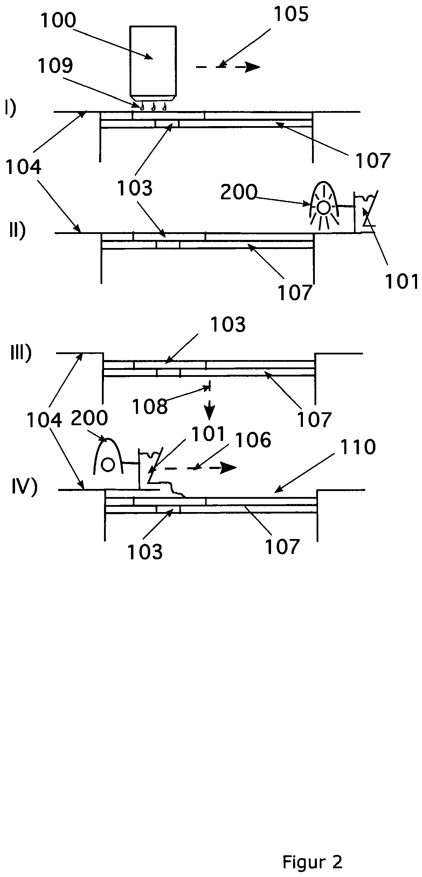

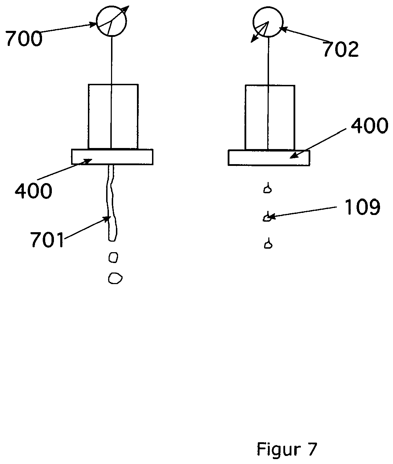

Figur 1 zeigt eine bekannte Vorrichtung nach dem Stand der Technik. Sie dient dazu Körper wie den Gegenstand 103 herzustellen. Die Komplexität des Körpers 103 ist dabei nahezu beliebig. Die Vorrichtung wird im Folgenden als 3D Drucker bezeichnet.
Der Prozess des Aufbauens eines Körpers 103 beginnt Indem die bewegliche Bauplattform 102 auf Ihre höchste Position In der Vorrichtung 104 gefahren wird. Dabei ist mindestens noch eine Schichtstärke zwischen Bauplattform 102 und der unteren Kante des Beschichters 101 vorhanden. Der Beschichter wird über ein nicht dargestelltes Achssystem auf eine Position vor dem Baufeld 111 gefahren. An dieser Stelle wird der Beschichter 101 mit seinem Vorrat 113 an Partikelmaterial in Vibration versetzt. Dabei läuft das Partikelmaterial aus dem Spalt 112 heraus. Durch eine Vorwärtsbewegung 106 des Beschichters 101 wird durch das auslaufende Material 110 die noch leere Schicht verfüllt.
Daraufhin oder noch während der Bewegung des Beschichters 101 wird der Druckkopf 100 mit einem ebenfalls nicht dargestelltem Achssystem in Bewegung gesetzt. Dieser folgt einer mäanderförmigen Bahn 105, die über das Baufeld führt. Dabei setzt er entsprechend der Schnittbilder des zu erzeugenden Körpers 103 Tropfen aus Bindemittel 109 ab und verfestigt diese Bereiche. Dieses Grundprinzip bleibt unabhängig vom eingesetzten Druckkopf 100 erhalten. Je nach Baugröße reduziert sich die mäanderförmlge Bahn 105 im Extremfall auf eine einfache Vor- und Zurückbewegung.
Nach dem Drucken wird die Bauplattform 102 In Richtung 108 bewegt. Dadurch wird eine neue Schicht 107 für den Beschichter 101 erzeugt. Mit dem Verfahren des Beschichters 101 auf seine Startposition beginnt der Schichtzyklus von neuem. Durch wiederholtes Durchführen dieses Zyklus entsteht am Ende das Bauteil 103. Nach dem Bauprozess kann das Bauteil 103 aus dem losen, es noch umgebenden Pulvers, befreit werden.
Eine Variante dieses Prozesses stellt der oben beschriebene Verfestigungsprozess über Sintern der Partikel des Partikelmaterials dar. Den Ablauf eines solchen Verfahrens stellt Figur 2 dar. Dieses Ist eine Erweiterung des oben geschilderten 3D Druckers.
Die Darstellung zeigt unter I den Druckvorgang der analog zu obiger Beschreibung abläuft. Der Druckkopf 100 wird mäanderförmig bewegt und setzt Tropfen mit Moderlermittel 109 Im Bereich des Bauteils 103 ab. Die Vorrichtung 104 ist In weiten Teilen wie ein 3D Drucker aufgebaut. Die Tropfenerzeugung basiert vorzugsweise auf dem piezoelektrischen Prinzip, da hiermit Druckköpfe mit höchsten Lebensdauern aufgebaut werden können. Dieser Effekt kann nur bis zu einer gewissen Grenztemperatur TGrenz eingesetzt werden, Darüber Ist die Tropfenerzeugung gestört oder der Tropfenerzeuger nimmt Irreversiblen Schaden.
Der Schritt II ist abweichend zur obenstehenden Beschreibung. Dabei wird eine Wärmelampe, die an das Moderlermittel angepasste Strahlung 201 erzeugt, über das Baufeld geführt. Bei Erreichen der bedruckten Stellen koppelt die Wärmeleistung gut In das Partikelmaterial ein und bringt es zum Versintern. Der Rest des Baufeldes nimmt dabei auch nicht unerhebliche Wärmemengen auf.
Die Prozessschritt III und IV sind wieder völlig analog zur Beschreibung des 3D Druckens. Zuerst wird die Bauplattform 102 in Richtung 108 in die Vorrichtung 104 abgesenkt. Danach verfüllt der Beschichter 101 die Schicht 110 mit neuem Partikelmaterial.

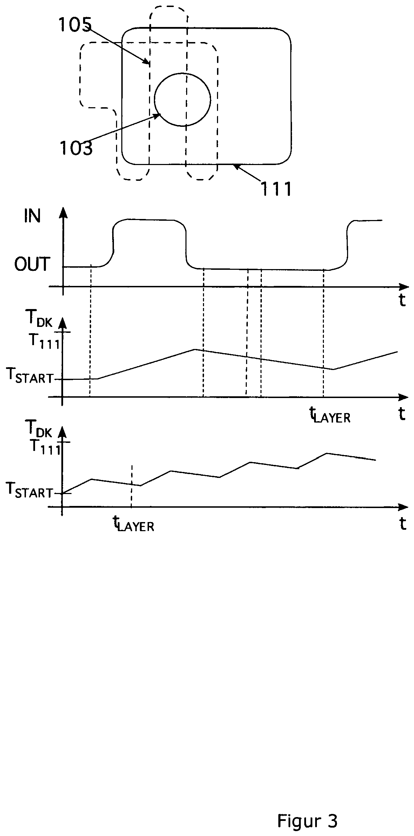

Figur 3 zeigt eine Draufsicht einer erfindungsgemäß bevorzugten Vorrichtung. Der Druckkopf 100 ist zur besseren Darstellung der mäanderförmigen Druckkopfbahn 105 weggelassen. Es Ist zu sehen, dass der Druckkopf weite Strecken seiner Bewegung über dem Baufeld 111 ausführt. Das Baufeld weist vereinfacht eine feste Temperatur T111 auf. Der Druckkopf hat zu Beginn des Prozesses die Temperatur T100 = TBeginn. Figur 3 zeigt zudem eine schematische Darstellung der Verweilzeit des Druckkopfes 100 über dem Baufeld 111. Das Schema gibt die Prozessschritte aus Figur 2 wieder.
Unter der Annahme, dass das Baufeld die Temperatur Till aufweist, ergeben sich die auf den weiteren Diagrammen von Figur 3 dargestellten Zusammenhänge. Der Druckkopf heizt sich jeweils über dem Baufeld auf. Danach kann er auf seiner Ruheposition wieder Wärme an die Umgebung abgeben. Je nach Wärmeaufnahme über dem Baufeld und Wärmeabgabe auf der Ruheposition stellt sich eine stationäre Temperatur zwischen der Starttemperatur TStart und der Baufeldtemperatur T111 ein. Es zeigt sich, dass bei hoher gewünschter Druckleistung der Druckkopf mit einer aktiven und oder passiven Kühlung vor übermäßiger Erwärmung über TGrenz geschützt werden muss. Zudem muss der Druckkopf zur Sicherstellung gleicher Dosierleistungen in einem sehr engen Temperaturbereich gehalten werden. Besonders bevorzugt sind hier 40-60°C. Wobei eine Regelung von +- 2°C erfahrungsgemäß gute Druckergebnisse bringt.

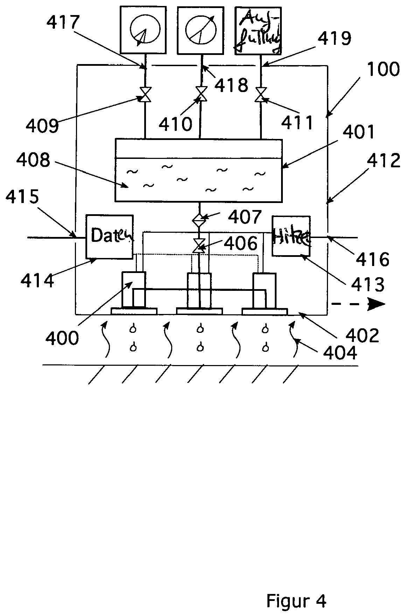

Figur 4 zeigt den Aufbau eines Druckkopfes 100 nach dem Stand der Technik. In einem Gehäuse 212 sind verschiedene Baugruppen Integriert. Wesentlich für die Tropfenerzeugung 109 sind die Druckmodule 400. Diese enthalten die Düsen, die plezoeletrischen Antriebe und Fluidsystem zur Verteilung der Flüssigkeit. Zudem Ist meist eine Heizung zur Temperaturregelung Integriert. Häufig werden diese Module 400 bei Druckkopfhersteilern wie Dimatix, Xaar, Seico, Epson, Konica oder Kyocera zugekauft. In die Innere Struktur kann nicht eingegriffen werden. Die Module 400 sind über Schläuche, ein Ventil 406 und einen Filter 407 mit einem Vorratstank 401, der die Druckflüssigkeit 408 enthält, verbunden. Elektrischen Verbindungen bestehen mit der Heizungsregelung 413 und der Datenelektronik 414. Die Anschlüsse sind jeweils nach außen geführt (415, 416). Der Vorratstank Ist mit weiteren jeweils über die Ventile (409, 410 und 411) geschalteten Leitungen mit Unterdruck, Überdruck und der Nachfüllleltung verbunden. Diese sind jeweils wieder nach außen geführt (417, 418 und 419).
Auf der Unterseite wird der Druckkopf über eine Abdeckplatte 402 gegen das Eindringen von Fluiden oder Verschmutzungen geschützt. Die Module und die Abdeckplatte nehmen bei der Fahrt über dem Baufeld 111 Wärme 404 in Form von Strahlung und Konvektion auf. Übersteigt die Temperatur den Stellwert der Heizungsregelung kann die Temperatur nicht mehr konstant gehalten werden.

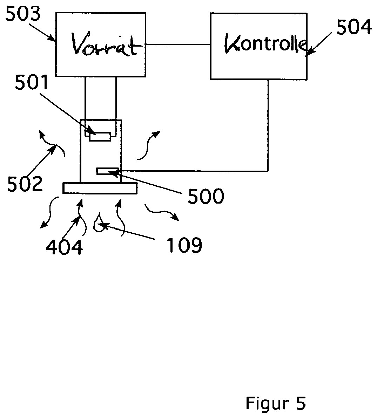

Figur 5 zeigt die Helzungsreglung bestehender Druckköpfe als Blockdarstellung. Die Heizung 501 selbst wird von einem Leistungssteller 503 gesteuert. Diese erhält seine Steuersignale von einem Regler 504 der mit einem Sensor 500 die Temperatur direkt im Modul 400 erfasst und somit einen geschlossenen Regelkreis realisiert. Die Wärmeverluste durch Wärmeleitung an die umgebenden Teile, die Konvektion Im Gehäuse und die Wärmestrahlungsverluste sind mit 502 gekennzeichnet. Zudem wird Energie mit den erwärmten Flüssigkeitstropfen 109 abgegeben, wenn die Temperatur der Tropfen höher Ist als die der nachgeführten Flüssigkeit. Alle Verluste müssen durch die Heizung ausgeglichen werden. Für die Tropfenbildung Ist Temperatur am unteren Ende des Moduls relevant.

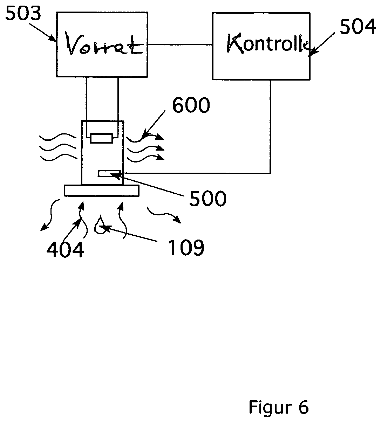

Figur 6 zeigt die erfindungsgemäße Ausführung eines Druckkopfes. Hier kommt ein massiver Wärmestrom 404 zu den oben genannten Größen hinzu. Diese Ist beim oben beschrieben HSS Prozess größer als die abgeführten Wärmemengen. Nur die Einführung zusätzlicher Kühlung 600 kann die Regelung durch die druckkopf-interne Heizung ermöglichen. Die Kühlung 600 kann alle erfindungsgemäß bevorzugten Ausführungsformen beinhalten.
Auch die in Figur 7 gezeigte Form der Wärmeabfuhr ist mit 600 abgedeckt. Dabei gibt es grundsätzlich zwei Möglichkeiten. Zum einen kann kalte Druckflüssigkeit durch den Druckkopf gepresst werden. Dazu wird das Modul 400 oder der Vorratstank 401 (Figur 4) mit Überdruck 700 beaufschlagt. Es wird eine große Menge Flüssigkeit abgegeben und es gelangt kältere Flüssigkeit in das Modul 400. In einer bevorzugten Ausführung der Erfindung gelangt die Flüssigkeit von einem Reservoir außerhalb des Bauraum mit Raumtemperatur über isolierte Leitungen zum Druckkopf 100 oder Druckmodul 400. Ebenso kann diese Form der Kühlung über die Tropfenerzeugung des Druckkopfes erfolgen. Dabei ilegt wie beim Standardbetrieb ein Unterdruck 702 am Tank an.
Die Intensität dieser Form der Kühlung muss über die Regelung 504 der Druckkopfhelzung 501 ermittelt werden. Verlässt die Temperatur den Regelbereich nach oben muss intensiver gekühlt werden. Dieses Szenario kann über die Schaltzeiten der Heizung 501 erfasst werden.
Die Kühlung des Moduls 400 kann auch über dessen Gehäuse erreicht werden. Dazu kann Druckluft 800 das Gehäuse anströmen um die Wärmeaufnahme 404 von unten auszugleichen. Die Druckluftdüsen können auch derart angeordnet werden, dass die Strömung vertikal am Druckmodul aufsteigt. Bei beiden Ausführungen der Erfindung muss die Abdeckplatte 402 (Figur 4) die Module zum Baufeld hin abdichten, damit kein Partikelmaterial aufgewirbelt wird.

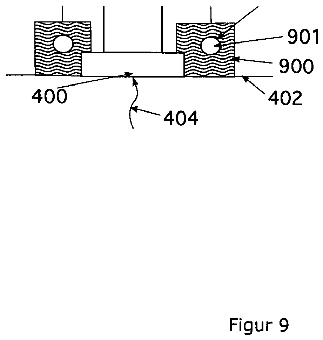

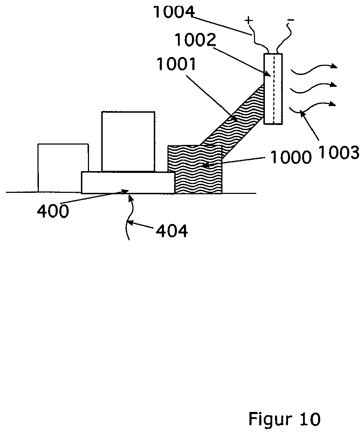

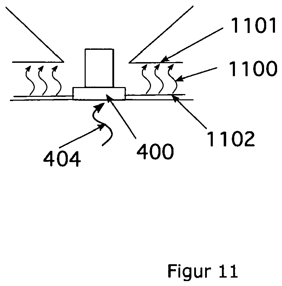

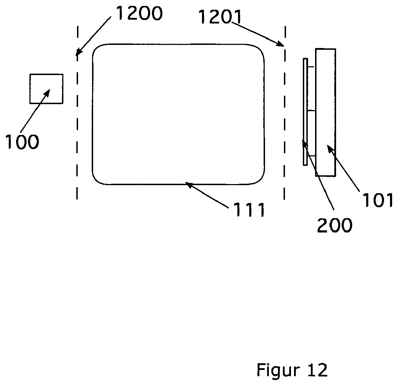

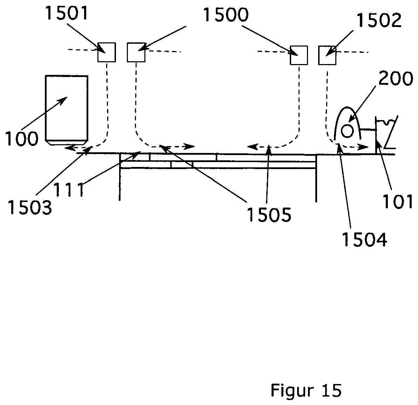

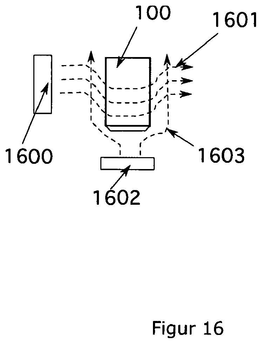

Eine weltere bevorzugte Ausführungsform der Erfindung zeigt Figur 9, Hier wird die abzuführende Wärme 404 vom Modul 400 über Wärmeleitung an ein Fluid abgegeben. Dazu sind Kontaktblöcke 900 am Modul 400 und der Abdeckplatte 402 In einer Weise angeordnet, die einen guten Wärmeübergang ermöglicht. Die Kontaktblöcke 900 weisen Bohrungen 903 auf in denen die Kühlflüssigkeit 901 strömen kann auf. Anschlüsse 902 verbinden die Kontaktblöcken mit einem Schlauchsystem das aus dem Druckkopf und dem warmen Bauraum herausführt, Die Verschlauchung wird isoliert ausgeführt. Je nach anfallender Wärmeleistung wird die Kühlflüssigkeit 901 dann passiv oder aktiv gekühlt.
Eine ebenso bevorzugte Vorrichtung zeigt Figur 10. Hier wird die überschüssige Wärme 404 am Modul 400 auch über Kontaktblöcke 1000 abgeführt. Diese sind hier aber über massive Kupferverbindungen 1001 mit Peltierelementen 1002 In Kontakt. Diese pumpen die Wärme bei Anlegen einer Spannung an die Kontakte 1004 aus dem Druckkopfgehäuse 412.
Zur Kühlung kann ebenso das Verdampfen einer Flüssigkeit genutzt werden. Figur 11 zeigt eine solche Anordnung. Die Wärme 404 am Modul 400 wird über Wärmeleitung an die Abdeckplatte 402 abgegeben, Auf dieser wird eine Flüssigkeit 1102 ständig nachdosiert, die einen geeigneten Verdampfungspunkt aufweist. Die Energie wird vom Dampf 1100 mitgenommen und über ein System zur Ableitung 1101 aus dem Druckkopf geführt um schädliches Kondensieren zu vermeiden. Wird beispielsweise als Flüssigkeit Wasser gewählt, können Temperaturen um 100 °C geregelt werden.
Eine bevorzugte Ausführung der Erfindung zeigt Figur 12 als Blockdarstellung. Der Druckkopf 100 wird vom Baufeld durch ein Schott 1200 getrennt. Somit kann in der Phase des Sinterns, Absenken und Beschichtens (Figur 3, II, III, IV) der Druckkopf 100 abkühlen ohne weitere Strahlung vom Baufeld 111 aufzunehmen. Ebenso wird die Konvektion vermindert. In gleicher Welse kann ein weiteres Schott 1201 dafür sorgen, dass während des Laufs des Druckkopfes 105 keine weitere Wärme durch die noch warme Lampe 200 an den Druckkopf 100 gelangt.

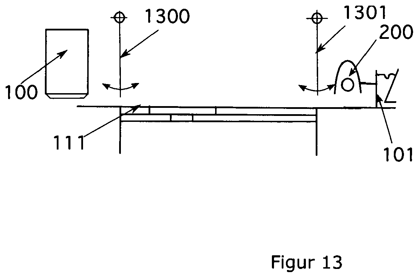

Figur 13 zeigt eine Seltenansichtht einer bevorzugten Ausführung der Erfindung. Das Schott 1300 für den Druckkopf 100 Ist drehbar gelagert. Damit kann der Druckkopf 100 es aufstoßen und zum Baufeld 111 gelangen. Nur während der Durchfahrt findet ein Energieaustausch statt. Das Schott 1300 bildet einen Raum für den Druckkopf in dem er kühlen kann. Ebenso kann das Schott 1301 für den Beschichter 101 und die Lampe 200 ausgeführt werden.

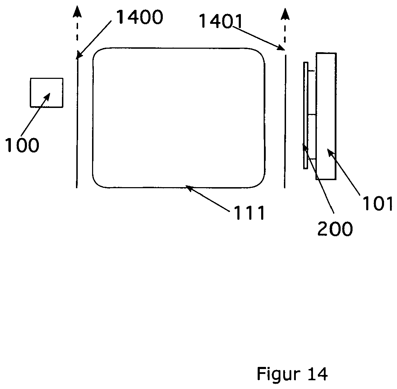

Die In Figur 13 dargestellten Schotte können auch aktiv ausgeführt sein wie In Figur 14 dargestellt. Dabei können wieder jeweils ein Schott 1400 für den Druckkopf 100 und eines 1401 für Beschichter 101 und Lampe 200 vorgesehen werden. Gegenüber dem drehbar gelagerten Schott ergibt sich der Vorteil kleinerer Einschränkungen der Bewegung der Aggregate Im Bauraum 111. Die Öffnungszeiten können zudem sehr kurz ausgeführt werden. Als Antriebe eignen sich beispielsweise pneumatische Aktoren oder elektrisch angetriebene Spindeln.
Eine bevorzugte Bauform der Abschottung zeigt Figur 15. Dabei wird auf bewegte Teile verzichtet. Düsen 1501, 1500, 1502 lassen unterschiedlich temperierte Luft als Vorhang Richtung Baufeld 111 strömen. Bei Einstellung einer laminaren Strömung findet nur eine geringe Durchmischung der Luftmassen 1503, 1505 und 1504 statt. Über entsprechende Heiz- und Kühlaggregate kann die Temperatur segmentweise gesteuert und auch geregelt werden.
Erfindungsgemäß Ist es nicht nur möglich den Druckkopf 100 durch Abschottung oder von Innen zu kühlen, sondern der Druckkopf kann ebenso von außen gekühlt werden. Figur 16 zeigt eine solche Ausführung. Der Druckkopf 100 wird dabei von Kühlluft 1601 und 1603 umspült. Diese wird aus Düsen 1600 und 1602 ausgebracht. Die Strömung der Kühlluft darf keine Wechselwirkungen mit dem Partikelmaterial eingehen. Deshalb ist es besonders bevorzugt, die Kühlung mit einer Abschottung zu kombinieren.

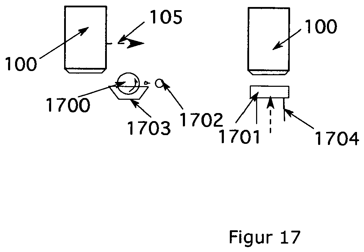

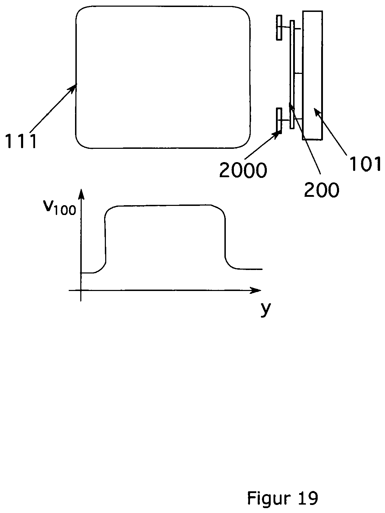

Eine weitere Form, den Druckkopf von außen zu kühlen, offenbart Figur 17. Dabei wird der Druckkopf 100 direkt In Kontakt zu einem wärmeabführendem Material gebracht. Dies kann beispielweise ein Flüssigkeit sein die Wärme aufnimmt. Dies kann mit einer Reinigungsvorrichtung für den Druckkopf kombiniert werden. So kann eine Walze 1700 gegenläufig mit dem In Richtung 105 bewegten Druckkopf 100 in Kontakt gebracht werden. Dabei nimmt die über eine Dusche 1702 oder ein flüssigkeitsgefülltes Becken 1703 befeuchtete Walze Wärme vom Druckkopf auf. Ebenso kann ein gut wärmeleitender Körper 1701 auf die Abdeckplatte 102 des Druckkopfes 100 gedrückt werden. Dieser Körper wird wiederum passiv oder aktiv, beispielsweise über eine Kühlflüssigkelt, 1704 gekühlt.
Der Druckkopf 100 kann nicht nur in seiner Ruheposition auskühlen sondern auch auf seiner Bahn 105 am Rand des Baufeldes 111, Dazu müssen die Baufeldränder 1800 kälter als das Baufeld sein. Dies kann dadurch erreicht werden, dass die Ränder 1800 des Baufeldes 111 als Rohre ausgeführt werden, die mit Kühlluft 1801 durchströmt werden.
Eine besonders bevorzugte Ausführung der Erfindung zeigen Figur 19 und 20. Figur 19 zeigt die Ausführung der Lampe 200 in einer Im Wesentlichen linienartigen Ausbildung. Damit wird eine homogene Ausleuchtung des Baufeldes 111 erzielt. Dabei kann durch die Steuerung die direkte Beeinflussung des Druckkopfes möglichst gering gehalten werden. Da am Rand des Baufeldes auf Grund der Luftzirkulation kühlere Bereiche trotz gleicher Strahlungsleistung entstehen können, können hier zusätzlich Segmente 2000 angebracht werden oder eine Lampe mit segmentweiser Steuerung der Leistung verwendet werden.
Figur 19 zeigt ebenso ein Diagramm für eine besonders bevorzugte Steuerung der Lampenbewegung einer linienartig ausgebildeten Lampe. Dabei ist es auf Grund der Konvektion am Baufeld 111 sinnvoll, die Ränder durch eine geringere Verfahrgeschwindigkeit bei konstanter Leistung stärker zu bestrahlen. Ebenso ist es möglich die Leistung anzupassen. Dabei setzt die Trägheit der Lampe dem Verfahren Grenzen.

### Bezugszeichenliste

- 100: Druckkopf
- 101: Beschilhter
- 102: Bauplattform
- 103: Körper
- 104: Vorrichtung
- 105: Druckkopfbahn
- 106: Beschichterbahn
- 107: gebaute Schichten
- 108: Richtung der Bauplattform
- 109: Mikrotropfen
- 110: Partikelmaterialwalze
- 111: Bauraum
- 112: Beschichterspalt
- 113: Pulvervorrat
- 200: Wärmelampe
- 400: Druckmodul
- 401: Vorratstank
- 402: Abdeckplatte
- 403: Gewärmte Oberfläche
- 404: Wärmeübergang
- 406: Ventil
- 407: Filter
- 408: Druckflüssigkelt
- 409: Ventil für Unterdruck
- 410: Ventil für Überdruck
- 411: Ventil für Nachfüllung
- 412: Druckkopfgehäuse
- 413: Helzungsregelung
- 414: Datenelektronik
- 415: Durchführung für Datenelektronik
- 416: Durchführung für Heizungsregelung
- 417: Durchführung für Unterdruckleitung
- 418: Durchführung für Überdruckleitung
- 419: Durchführung für Nachfüllleitung
- 500: Temperatursensor
- 501: Helzung
- 502: Wärmeabgabe
- 503: Leistungssteller
- 504: Regler
- 600: Kühlung
- 700: Überdruck
- 701: Überdruckstrahl
- 702: Unterdruck
- 800: Strömung horizontal
- 801: Strömung vertikal
- 802: Luftdüsen
- 900: Kontaktblock
- 901: Kühlflüssigkeit
- 902: Kühlleitung
- 903: Kühlrohr
- 1000: Kontaktblock
- 1001: Massive Wärmeleiter
- 1002: Peltierelement
- 1003: Abgepumte Wärme
- 1004: Elektrische Kontaktierung
- 1100: Dampf
- 1102: Flüssigkeit
- 1101: Dampfführung
- 1200: Druckkopfschott
- 1201: Beschichterschott
- 1300: Drehbares Druckkopfschott
- 1301: Drehbares Beschichterschott
- 1400: Verschiebbares Druckkopfschott
- 1401: Verschiebbares Beschichterschott
- 1500: Luftdüsen für Bauraumströmung
- 1501: Luftdüse für Druckkopfströmung
- 1502: Luftdüse für Beschichterströmung
- 1503: Druckkopfströmung
- 1504: Beschlchterströmung
- 1505: Bauraumströmung
- 1800: Baufeldrand
- 1801: Kühlluft für den Baufeldrand
- 2000: Zusatzlampen

## Patentansprüche

1. Vorrichtung zum Herstellen dreidimensionaler Modelle mittels Schichtauftragstechnik, wobei die Vorrichtung geeignet ist partikelförmiges Baumaterial auf ein Baufeld aufzutragen, anschließend über einen Tintenstrahldruckkopf ein Moderiermittel selektiv auf das Baumaterial aufzutragen und die bedruckten Bereiche über Zufuhr von IR-Energie zu verfestigen, **dadurch gekennzeichnet, dass** der Druckkopf (100) durch aktive und/oder passive Kühlung (600) vor übermäßiger Erwärmung geschützt ist und dass die Vorrichtung (104) eine Temperaturregelung aufweist, die in Zusammenspiel mit einem Temperatursensor (500) die Heizmöglichkeiten Im Bauraum (111) regelt, wobei der Temperaturbereich der Bauraumatmosphäre bei 60° C bis 120° C geregelt ist und der Temperaturgradient auf dem Baufeld dabei 10°C nicht übersteigt.

2. Vorrichtung nach Anspruch 1, **dadurch gekennzeichnet, dass** der Druckkopf (100) über einen Temperatursensor (500), eine Temperaturregelung und interne Mittel zur Kühlung (600) und zur Heizung (501) verfügt.

3. Vorrichtung nach Anspruch 1 und 2, **dadurch gekennzeichnet, dass** die Kühlung das zu verdruckende Druckmedium ist oder
dass die Kühlung (600) Kühlluft ist, die Im Inneren des Druckkopfes (100) empfindliche Teile umspült oder dass die Kühlung (600) des Druckkopfes (100) ein zusätzliches flüssiges Medium ist oder
dass die Kühlung Peltierelemente sind.

4. Vorrichtung nach Anspruch 3, **dadurch gekennzeichnet, dass** im Druckkopf (100) zur Kühlung (600) ein Verdampfer angeordnet Ist.

5. Vorrichtung nach Anspruch 1, **dadurch gekennzeichnet, dass** der Druckkopf (100) eine Abschottung aufweist, die diesen vor der Restenergie des Bauraums (111) und des Partikelmaterials und aktiven Energiezufuhr auf dem Baufeld schützt.

6. Vorrichtung nach Anspruch 1, **dadurch gekennzeichnet,**
**dass** der Druckkopf (100) hinter eine flexible oder feste Wand Im Bauraum (111) verfahrbar Ist.

7. Vorrichtung nach Anspruch 1, **dadurch gekennzeichnet,**
**dass** Sensoren im Druckkopf (100) oder der Wand angebracht sind.

8. Vorrichtung nach Anspruch 5, **dadurch gekennzeichnet,**
**dass** die Abschottung eine verschiebliche Wand oder/und ein Luftvorhang Ist.

9. Vorrichtung nach Anspruch 1, **dadurch gekennzeichnet, dass** der Druckkopf (100) eine externe Kühlung (600) aufweist.

## Claims

1. A device for producing three-dimensional models by means of a layer application technique, the device being suitable for applying particulate construction material onto a construction field, subsequently applying a moderating agent selectively onto the construction material via an inkjet print head and solidifying the printed areas by supplying IR energy, **characterized in that** the print head (100) is protected from excessive heating by active and/or passive cooling (600), and **in that** the device (104) has a temperature control system which, in interaction with a temperature sensor (500), controls the heating possibilities in the construction space (111), the temperature range of the construction space atmosphere being controlled at 60°C to 120°C and the temperature gradient on the construction field not exceeding 10°C.

2. The device according to claim 1, **characterized in that** the print head (100) has a temperature sensor (500), temperature control and internal means for cooling (600) and heating (501).

3. The device according to claims 1 and 2, **characterized in that** the cooling is effected via the print medium to be printed or that the cooling (600) is effected via cooling air which flows around sensitive parts inside the print head (100) or that the cooling (600) of the print head (100) is effected via an additional liquid medium or that the cooling is effected via Peltier elements.

4. The device according to claim 3, **characterized in that** an evaporator is arranged in the print head (100) for cooling (600).

5. The device according to claim 1, **characterized in that** the print head (100) has a partition protecting it from the residual energy of the construction space (111) and of the particulate material and from the active energy supply on the construction field.

6. The device according to claim 1, **characterized in that** the print head (100) is movable behind a flexible or fixed wall in the construction space (111).

7. The device according to claim 1, **characterized in that**
sensors are mounted in the print head (100) or the wall.

8. The device according to claim 5, **characterized in that**
the partition is a sliding wall and/or an air curtain.

9. The device according to claim 1, **characterized in that** the print head (100) comprises external cooling (600).

## Revendications

1. Dispositif de production de modèles tridimensionnels au moyen d'une technique d'application de couches, le dispositif étant approprié pour appliquer un matériau de construction en particules sur un champ de construction, appliquer ensuite un agent modérateur de manière sélective sur le matériau de construction par l'intermédiaire d'une tête d'impression à jet d'encre et solidifier les zones imprimées par apport d'énergie IR, **caractérisé en ce que** la tête d'impression (100) est protégée d'un échauffement excessif par un refroidissement actif et/ou passif (600), et **en ce que** le dispositif (104) comporte un contrôle de température qui, en interaction avec un capteur de température (500), règle les possibilités de chauffage dans l'espace de construction (111), la plage de température de l'atmosphère de l'espace de construction étant réglée entre 60°C et 120°C et le gradient de température sur le champ de construction ne dépassant pas 10°C.

2. Appareil selon la revendication 1, **caractérisé en ce que** la tête d'impression (100) comporte un capteur de température (500), un contrôle de température et des moyens internes de refroidissement (600) et de chauffage (501).

3. Dispositif selon les revendications 1 et 2, **caractérisé en ce que** le refroidissement est réalisé par le fluide sous pression à imprimer ou que le refroidissement (600) est réalisé par de l'air de refroidissement qui circule autour des pièces sensibles à l'intérieur de la tête d'impression (100) ou que le refroidissement (600) de la tête d'impression (100) est réalisé par un fluide liquide supplémentaire ou que le refroidissement est réalisé par des éléments Peltier.

4. Dispositif selon la revendication 3, **caractérisé en ce qu'**un évaporateur est disposé dans la tête d'impression (100) pour le refroidissement (600).

5. Dispositif selon la revendication 1, **caractérisé en ce que** la tête d'impression (100) comporte un cloisonnement qui la protège de l'énergie résiduelle de l'espace de construction (111) et du matériau particulaire et de l'apport d'énergie active sur le champ de construction.

6. Dispositif selon la revendication 1, **caractérisé en ce que** la tête d'impression (100) est mobile derrière une paroi flexible ou fixe dans l'espace d'installation (111).

7. Dispositif selon la revendication 1, **caractérisé en ce que**
des capteurs sont montés dans la tête d'impression (100) ou dans la paroi.

8. Dispositif selon la revendication 5, **caractérisé en ce que**
la cloison est une paroi coulissante et/ou un rideau d'air.

9. Dispositif selon la revendication 1, **caractérisé en ce que** la tête d'impression (100) comporte un système de refroidissement externe (600).
